# EUROPÄISCHE PATENTANMELDUNG

(11) **EP 0 871 131 A2**
(43) Veröffentlichungstag der Anmeldung: **14.10.1998**
(21) Anmeldenummer: 98105770.6
(22) Anmeldetag: 30.03.1998
(51) Int. Cl.: G06F 13/42

(54) **Vorrichtung und Verfahren zum Synchronisieren dezentraler zyklisch getakteter Baugruppen**

(30) Priorität: 10.04.1997 DE 19714930
(71) Anmelder: SIEMENS AKTIENGESELLSCHAFT, 80333 München (DE)
(72) Erfinder: Franke, Michael, Dipl.Ing., 01067 Dresden (DE); Gärber, Jürgen, 90763 Fürth (DE); Hoffmann, Manfred, Dipl-Ing., 92256 Hahnbach (DE)

(57) **Zusammenfassung**

Ausgelöst durch einen zeitgleiches Ereignis auf dem seriellen Bussystem (B) werden die aktuellen Timerstände/Phasenwinkel (ϕ1, ϕ2) auf allen dezentralen Antrieben (A1,A2) zeitgleich abgetastet und anschließend zeitlich versetzt über den seriellen Bus zu einer Systemsteuerung (S) mit einer Auswerteeinheit übertragen. Entsprechend einem jeweils ermittelten Phasenfehler (Δϕ) wird mit einem Regelglied (R) über eine zu übertragende Stellgröße (RW) die Periodendauer von aufzusynchronisierenden dezentralen Teilnehmern (hier A2) so manipuliert, daß der jeweilige Teilnehmer in einen synchronen Bereich einläuft.

## Beschreibung

Die Erfindung bezieht sich auf eine Vorrichtung sowie ein dazugehöriges Verfahren zum Synchronisieren dezentraler zyklisch getakteter Baugruppen an seriellen, nicht deterministischen Bussystemen. Es ist bekannt, zyklisch getaktete Baugruppen über serielle Bussysteme miteinander zu verkoppeln. Die Abtastzyklen werden in den jeweiligen Baugruppen generiert und sind in Folge von Quarzdrift und/oder Ahlaufphase nicht phasensynchron. Das hat zur Folge, daß selbst gleichzeitig in den Baugruppen eintreffende Informationen (z.B. Sollwerte) aufgrund beispielsweise einer sequentiellen Programmabarbeitung auf Seiten der Baugruppen nicht zeitgleich wirksam werden.

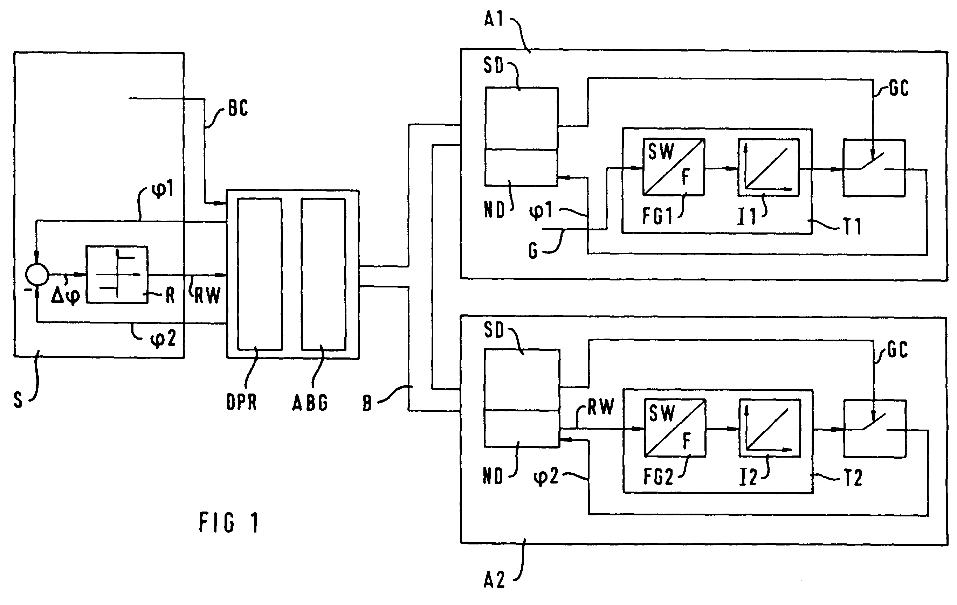

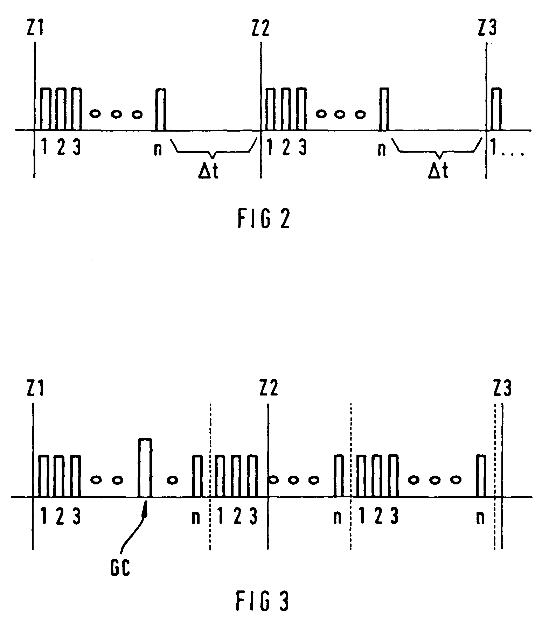

Herkömmlicherweise wird eine Synchronisation dadurch erreicht, daß die verschiedenen an das Bussystem angeschalteten Baugruppen/Teilnehmer durch das Bussystem getaktet werden, das als freier Buszyklus läuft. Um in einem Master-Slave-System Slaves über einen seriellen Bus zu synchronisieren, führt bei heutigen Konzeptansätzen der Master eine Uhr, mit deren Hilfe er den Buszyklus jeweils zeitgleich im Reglertakt startet, z.B. jede ms beginnt ein neuer Umlauf. Um diese Zeit garantieren zu können, sind Teilnehmerzahl und Telegrammlängen auf ein Mengengerüst begrenzt, das unterhalb der Synchronisationszeit liegt. Je nach Anforderungen können weitere Buszyklen nur ablaufen, wenn der letzte auch - mit Reserven für Telegrammwiederholungen - rechtzeitig abgeschlossen wird. Weitere Master am Bus sind nicht möglich, da sie durch Tokenweitergabe, GAP-Update, zu lange Telegramme, etc. die Zeitberechnungen des 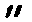 Synchronisationsmasters" unterlaufen würden. Damit verbunden tritt der Nachteil auf, daß in ungünstigen Fällen ein teilweise erheblicher Verlust an Übertragungsbandbreite im Bussystem auftritt, denn die Wartezeiten vom Telegrammende bis zur erneuten Synchronisation sind verlorene Zeit. Diese Problematik des Standes der Technik ist in der Darstellung nach FIG 2 in einem Zeitdiagramm veranschaulicht, wobei über die Abszisse (Zeitachse) die auf dem Bus anstehenden Synchronisationssignale für Teilnehmer 1 bis n dargestellt sind. Auf den Ordinaten sind mehrere Buszyklen Z1 bis Z3 dargestellt. Die Wartezeiten vom Telegrammende bis zur erneuten Synchronisation sind mit Δt gekennzeichnet.

Eine andere bekannte Möglichkeit zur Synchronisation besteht in der Zuhilfenahme gesonderter Busmechanismen, wie beispielsweise zusätzlicher Steuerleitungen. Der damit verbundene Aufwand ist jedoch unerwünscht, da gerade bei einer Vielzahl von an das Bussystem anzuschaltenden Baugruppen ein zusätzlicher Verkabelungsaufwand neben dem eigentlichen Bus vermieden werden soll. Jedoch ist letztere Synchronisationsmöglichkeit auch für nicht deterministische bzw. asynchrone Bussysteme geeignet.

Gerade nicht deterministische Bussysteme bringen die Schwierigkeiten mit sich, daß nicht vorhergesagt werden kann, wann ein auf Seiten des Bus-Senders bereitgestelltes Signal auf Seiten des oder der Bus-Empfänger eintrifft und verarbeitet werden kann, da nicht von vornherein feststeht, wann das Signal über den Bus übertragen wird. Durch eine möglichst hochpriore Abtastung auf Seiten eines Bus-Empfängers kann lediglich gewährleistet werden, daß das entsprechende Signal, sobald es am Bus ansteht, vom entsprechenden Bus-Empfänger sofort verarbeitet wird. Diese Problematik bereitet daher erhebliche Schwierigkeiten bei einer Synchronisation dezentraler zyklisch getakteter Baugruppen an seriellen, nicht deterministischen Bussystemen. Ein Vertreter eines solchen nicht deterministischen Bussystemes ist beispielsweise der in Industriekreisen sehr verbreitete PROFIBUS, insbesondere der PROFIBUS-DP.

Aufgabe der vorliegenden Erfindung ist es daher, eine Vorrichtung sowie ein dazugehöriges Verfahren zu schaffen, mit dem eine Synchronisation dezentraler zyklisch getakteter Baugruppen an seriellen, nicht deterministischen Bussystemen ermöglicht wird, welche allein mit der Funktionalität des Bussystemes auskommen und keine darüber hinausgehenden Mittel wie beispielsweise zusätzliche Steuerleitungen benötigen.

Gemäß der vorliegenden Erfindung wird diese Aufgabe dadurch gelöst, daß eine Vorrichtung nach dem Oberbegriff des Anspruches 1 dadurch weitergebildet wird, daß ein Mechanismus vorgesehen ist, welcher eine zeitgleiche Abtastung der Lage der jeweiligen Abtastzyklen aller oder einer Anzahl von Baugruppen ermöglicht, und ein Regelglied vorgesehen ist, über welches in Abhängigkeit der relativen Lage der jeweiligen Abtastzyklen mindestens eine Stellgröße vorgebbar ist, mit der die Zykluszeit mindestens eines Mittels zum Erzeugen von Abtastzyklen so manipulierbar ist, daR die dadurch bedingte Abweichung klein gegenüber der Grundzykluszeit ist und jeder manipulierte Abtastzyklus in einen synchronen Bereich einläuft.

Eine erste vorteilhafte Ausgestaltung der Vorrichtung gemäß der vorliegenden Erfindung ist dadurch gekennzeichnet, daß die abgetasteten Lagewerte der jeweiligen Abtastzyklen zeitlich versetzt über das serielle Bussystem zum Regelglied übertragbar sind.

In einer weiteren vorteilhaften Ausgestaltung der Vorrichtung gemäß der vorliegenden Erfindung werden die Abtastzyklen auf besonders vorteilhafte Arte und Weise erzeugt. Dies geschieht dadurch, daß jedes Mittel zum Erzeugen von Abtastzyklen als programmierbarer Timer ausgeprägt ist.

In einer weiteren vorteilhaften Ausgestaltung der Vorrichtung gemäß der vorliegenden Erfindung wird der Mechanismus zur zeitgleichen Abtastung der Lage der jeweiligen Abtastzyklen auf besonders einfache Art und Weise realisiert. Dies geschieht dadurch, daß zur zeitgleichen Abtastung der Lage der jeweiligen Abtastzyklen von der Systemsteuerung ein globales Signal zeitgleich über das Bussystem an die dezentralen Baugruppen absetzbar ist, auf das hin jede Baugruppe den zugehörigen Lagewert zur Übertragung über das Bussystem bereitstellt.

In einer weiteren vorteilhaften Ausgestaltung der Vorrichtung gemäß der vorliegenden Erfindung werden besonders geeignete Ausgestaltungen für das Regelglied vorgeschlagen. Solche besonders vorteilhaften Ausgestaltungen sind dadurch gekennzeichnet, daR das Regelglied als Zweipunktregler oder als Dreipunkt- oder Mehrpunktregler oder als Regler mit proportionalem und/oder integralem Verhalten ausgeprägt ist.

In einer weiteren vorteilhaften Ausgestaltung der Vorrichtung gemäß der vorliegenden Erfindung wird eine besonders effektive Stellgröße durch das Regelglied erzeugt. Dies geschieht dadurch, daß das Regelglied als adaptiver Regler ausgeprägt ist.

In einer weiteren vorteilhaften Ausgestaltung der Vorrichtung gemäß der vorliegenden Erfindung wird eine Synchronisation im Rahmen einer Master-Slave-Anordnung erreicht, indem das Regelglied auf Seiten der Systemsteuerung angeordnet ist.

In einer weiteren vorteilhaften Ausgestaltung der Vorrichtung gemäß der vorliegenden Erfindung wird die Systemsteuerung von der Aufgabe des Regelgliedes entlastet. Dies wird dadurch er reicht, daß mindestens ein Regelglied auf Seiten einer dezentralen Baugruppe angeordnet ist.

In einer weiteren vorteilhaften Ausgestaltung der Vorrichtung gemäß der vorliegenden Erfindung ist eine besonders vorteilhafte Anwendung dieser Vorrichtung vorgeschlagen. Diese ist dadurch gekennzeichnet, daß als dezentrale Baugruppen dezentrale Antriebe eines Antriebssystemes vorgesehen sind und als jeweiliger Lagewert der zugehörigen Abtastzyklen jeweils ein dem zugeordneten Antrieb zugehöriger Phasenwinkel vorgesehen ist.

Desweiteren wird ein Verfahren zum Synchronisieren dezentraler zyklisch getakteter Baugruppen nach dem Oberbegriff des Anspruches 10 zur Lösung der eingangs gestellten Aufgabe dadurch weitergebildet, daß eine zeitgleiche Abtastung der Lage der jeweiligen Abtastzyklen aller oder einer Anzahl von Baugruppen vorgenommen wird, und über eine Regelung in Abhängigkeit der relativen Lage der jeweiligen Abtastzyklen mindestens eine Stellgröße vorgegeben wird, mit der die Zykluszeit mindestens eines Mittels zum Erzeugen von Abtastzyklen so manipuliert wird, daß die dadurch bedingte Abweichung klein gegenüber der Grundzykluszeit ist und jeder manipulierte Abtastzyklus in einen synchronen Bereich einläuft.

Die damit erreichbaren Vorteile entsprechen den anläßlich Anspruch 1 genannten Vorteilen.

Weitere Einzelheiten und Vorteile der vorliegenden Erfindung ergeben sich anhand der folgenden Darstellung eines vorteilhaften Ausführungsbeispieles und in Verbindung mit den Figuren. Es zeigen:
- FIG 1: ein Blockschaltbild einer Vorrichtung zum Synchronisieren von dezentralen zyklisch getakteten Antrieben an einem seriellen deterministischen Bussystem,
- FIG 2: ein Zeitdiagramm einer Synchronisation über einen seriellen Bus nach dem Stand der Technik und
- FIG 3: ein Zeitdiagramm einer Synchronisation über einen nicht deterministischen seriellen Bus gemäß der Erfindung.

In der Darstellung gemäß FIG 1 ist ein Blockschaltbild einer Vorrichtung zum Synchronisieren von dezentralen, zyklisch getakteten Antrieben A1 und A2 eines Antriebsystems an einem seriellen nicht deterministischen Bussystem B gezeigt. Die Abtastzyklen moderner digital geregelter Antriebe werden mit Hilfe von programmierbaren Timereinheiten T1 und T2, welche den jeweiligen Antrieben A1 bzw. A2 zugeordnet sind, generiert. Solche programmierbare Timereinheiten sind beispielsweise bei Microcontrollern direkt in den Prozessor integriert. Die Zeitbasis wird durch einen Quarz- bzw. einen Oszillatorschaltkreis (nicht gezeigt) vorgegeben.

Bei vielen elektrischen Antriebssystemen werden die notwendigen einzelnen Bewegungen eines Gesamtbewegungsvorganges von Einzelantrieben (auch Slaves genannt) generiert, welche über ein serielles Bussystem B mit einer Systemsteuerung S (auch als Master bezeichnet) verbunden sind und durch diese Systemsteuerung koordiniert werden.

Aufgrund von zeitlich versetzten Einschaltzeitpunkten (z.B. Reset) und/oder Quarztoleranzen resultiert eine im folgenden als Phasenfehler Δϕ bezeichnete Verschiebung bzw. Drift der jeweiligen Abtastzyklen der dezentralen Antriebe A1 und A2 gegeneinander. Dieser Phasenfehler Δϕ führt zu Ungenauigkeiten in der Synchronisation, da z.B. Lagesollwerte der einzelnen elektrischen Antriebe zu unterschiedlichen Zeitpunkten wirksam werden, selbst wenn sie zeitgleich übertragen bzw. freigegeben wurden. Solche Ungenauigkeiten betreffen auch die Erfassung von Istwerten.

Die Anschaltung von dezentralen Antrieben A1 bzw. A2 an einen seriellen Bus B mit dem Ziel einer gemeinsamen Steuerung erfolgt in der Regel über eine Anschaltbaugruppe (nicht gezeigt), auf der die für das Busprotokoll notwendigen Dienste realsiert werden. Die für die jeweilige Baugruppe, also den jeweiligen Antrieb A1 bzw. A2, relevanten Daten (z.B. Steuerdaten SD zur Synchronisation oder Nutzdaten ND wie beispielsweise Sollwerte zur Lageregelung) werden von der Anschaltbaugruppe zur Verfügung gestellt. Zur Anschaltung der Systemsteuerung S, z.B. einer speicherprogrammierbaren Steuerung, ist eine Anschaltbaugruppe ABG vorgesehen, welche beispielsweise als Schnittstelle ein Dual-Port-Ram DPR aufweist. Die dezentralen Baugruppen/Antriebe A1 bzw. A2 arbeiten mit einem internen, in der Regel konstanten Abtastintervall, welches im folgenden auch als Grundzykluszeit G bezeichnet werden soll. Prinzipiell weisen alle dezentralen Antriebe A1 bzw. A2 eine gleiche Grundzykluszeit G auf, welche jedoch aus den im vorangehenden geschilderten Gründen die als Phasenfehler Δϕ bezeichnete Verschiebung bzw. Drift der Abtastzyklen gegeneinander aufweisen. Vorstellbar sind aber auch Cluster mit Antrieben unterschiedlicher Grundzykluszeit, wobei innerhalb eines jeden Clusters Antriebe mit gleicher Grundzykluszeit und den oben beschriebenen Phasenfehlern vorliegen.

Als Mittel zum Erzeugen solcher Abtastzyklen ist in jedem dezentralen Antrieb A1 bzw. A2 ein programmierbarer Timer T1 bzw. T2 vorgesehen. Im konkreten Ausfuhrungsbeispiel wird ein solcher Timer T1 bzw. T2 beispielsweise jeweils durch einen programmierbaren Frequenzgenerator FG1 bzw. FG2 beschrieben, dem jeweils ein Integrator I1 bzw. I2 nachgeschaltet ist. Eingangsseitig wird dem programmierbaren Frequenzgenerator jeweils eine Sollfrequenz vorgegeben, welche variierbar ist. Da durch den Integrator jeweils eine Frequenz aufintegriert wird, steht am Integrator ausgangsseitig ein dem jeweiligen Abtastzyklus des zugehörigen dezentralen Antriebs A1 bzw. A2 zugehöriger Winkel an. Diese jeweiligen Winkel werden auch als Phasenwinkel ϕ1 für den Antrieb A1 bzw. ϕ2 für den An-trieb A2 bezeichnet. Selbst wenn durch den Busmechanismus gewährleistet werden kann, daß Sollwerte für die einzelnen dezentralen Antriebe zum gleichen Zeitpunkt an diesen anstehen, werden sie aufgrund der nicht synchronen internen Abtastzyklen der Baugruppen zu unterschiedlichen, nicht vorhersagbaren Zeiten von den jeweiligen Baugruppen abgetastet (z.B. Driften die Zyklen wie erwähnt aufgrund der Quarztoleranzen gegeneinander). Wird z.B. eine Lageregelung im dezentralen Antrieb mit einer Grundzykluszeit G von vier Millisekunden abgetastet, so ergibt sich ein maximaler Synchronisationsfehler von Δt = 0...4 msec, was sich in einem relativen dynamischen Phasenfehler Δϕ zeigt.

Aus diesem Grund wird gemäß der vorliegenden Erfindung auf dem Bussystem ein Mechanismus zur Verfügung gestellt, mit dem zeitgleich auf allen dezentralen Antrieben ein Ereignis ausgelöst werden kann, mit welchem eine zeitgleiche Abtastung der Lage der jeweiligen Abtastzyklen aller oder auch einer projektierbaren Anzahl von dezentralen Baugruppen A1 bzw. A2 ermöglicht wird. Ein solches Ereignis kann beispielsweise in einem global auf dem Bussystem B bereitgestellten Signal bestehen. Eine solche Funktionalität, wie sie beispielsweise auch der eingangs erwahnte PROFIBUS bietet, wird auch als 'Broadcast' bezeichnet. Wird nun von Seiten der Systemsteuerung S ein solcher Broadcast BC ausgelöst, so steht auf dem Bussystem B für alle dezentralen Baugruppen/Antriebe A1, A2 ein globales Steuerkommando GC an. Zwar kann aufgrund des nicht deterministischen Bussystemes von Seiten der Systemsteuerung S nicht vorhergesehen werden, wann dieses Broadcast-Signal über das Bussystem B übertragen wird, jedoch ist gewährleistet, daß es allen dezentralen Baugruppen/Antrieben A1, A2 gleichzeitig zur Verfügung steht. Durch eine geeignete Ausgestaltung der jeweiligen Anschaltbaugruppen auf Seiten der dezentralen Baugruppen (z.B. durch Verwendung eines hochprioren Interrupts) wird durch das globale Steuerkommando GG zeitlich auf allen dezentralen Baugruppen/Antrieben A1, A2 der jeweils aktuelle Timerstand und damit die Lage des jeweiligen Abtastzyklus bzw. Phasenwinkels ϕ1 bzw. ϕ2 abgetastet.

In der Darstellung gemäß FIG 3 sind der im vorangehenden geschilderte Mechanismus und dessen Auswirkungen auf die Übertragungsbandbreite des seriellen Bussystemes gezeigt. Die Darstellung entspricht weitgehend der von FIG 2, jedoch mit dem Unterschied, daß nunmehr ein globales steuerkommando GG über den Bus B bereitsgestellt wird, wodurch Bandbreitenverluste in Form von Wartezeiten Δt vom Telegrammende bis zum nächsten Buszyklus Z2...Z3 vermieden werden können. Neben der größeren Übertragungsbandbreite wird auf diese Weise gleichzeitig als zusätzlicher Vorteil ein Multimasterbetrieb ermöglicht.

Der so ermittelte Phasenwinkel ϕ1 bzw. ϕ2 wird anschließend als Nutzdatum ND zur Systemsteuerung S übertragen. Entscheidend ist hierbei, daß die zeitgleich abgetasteten dem jeweiligen dezentralen Antrieb A1 bzw. A2 zugehörigen Phasenwinkel ϕ1 bzw. ϕ der jeweiligen Abtastzyklen durch die vorliegende Erfindung nunmehr zeitlich versetzt über das serielle nicht deterministische Bussystem B zur Systemsteuerung S übertragen werden können.

Im Ausführungsbeispiel ist eine Auswerteeinheit, welche ein Regelglied R umfaßt, auf Seiten der Systemsteuerung S vorgesehen. Prinzipiell ist jedoch auch eine Anordnung dieser Auswerteeinheit auf Seiten einer oder auch mehrerer dezentraler Baugruppen möglich, was sich je nach Anwendungsfall als vorteilhaft erweisen kann. Im konkreten Ausführungsbeispiel soll jedoch der erstgenannte Fall zugrundegelegt werden. In der genannten Auswerteeinheit auf Seiten der Systemsteuerung S wird nun die Differenz der einzelnen Phasenwinkel ϕ1 und ϕ2 und damit der eingangs angesprochene Phasenfehler Δϕ ermittelt und dem genannten Regelglied R zugeführt. Ein solches Regelglied R kann im einfachsten Fall als Zwei-Punkt-Regler ausgebildet sein. Denkbar sind jedoch noch Drei-Punkt- oder andere Mehr-Punkt-Regler oder auch ein P-Glied, ein I-Glied oder ein PI-Glied. Welche Art von Regelung für das Regelglied R gewählt wird, hängt ebenfalls vom konkreten Anwendungsfall ab. Entsprechend dem ermittelten Phasenfehler Δϕ wird nun die Zykluszeit mindestens eines programmierbaren Timers T1 bzw. T2 zum Erzeugen von Abtastzyklen manipuliert. Dies kann beispielsweise dadurch geschehen, daß entsprechend dem ermittelten Phasenfehler Δϕ die Zykluszeit mindestens eines der dezentralen Antriebe so variiert wird, daß der manipulierte Abtastzyklus in einen synchronen Bereich einläuft.

Dazu wird eine der dezentralen Baugruppen/Antriebe (im vorliegenden Ausführungsbeispiel ist dies Antrieb A1) als Referenzlage des entsprechenden Abtastzyklus bzw. Referenzwinkel ϕ1 zugrundegelegt, auf den der andere dezentrale Antrieb A2 oder mehrere andere dezentrale Antriebe aufzusynchronisieren sind. Vorzugsweise ist dazu die vorzugebende Differenz der Abtastzeiten der Timer T1 und T2 größer als die natürliche Drift, so daß der Phasenfehler Δϕ abnimmt.

Da alle Timer T1, T2 den gleichen Bereich durchlaufen (z.B. von einem voreingestellten Reload-Wert bis zum Überlauf, bei dem der Reload-Wert geladen und der Abtastzyklus neu gestartet wird), kann die relative Lage der Abtastzyklen der verschiedenen dezentralen Antriebe zueinander durch Vergleich der ausgelesenen Timerstände ermittelt werden. Der Synchronisationsmechanismus soll am Beispiel der zwei zu synchronisierenden dezentralen Antriebe A1 und A2 erläutert werden. Im Unterschied zur Darstellung nach FIG 1 sollen die folgenden Ausführungen am Beispiel eines als Dreipunktregler ausgestalteten Regelglieds gemacht werden, wobei selbstverständlich beliegige Regelglieder einsetzbar sind.

Die Antriebe A1 und A2 besitzen beide einen Reload-Wert von 1000 und zählen abwärts. Jeweils beim Übergang von T1 = 0 nach -1 bzw. T2 = 0 nach -1, wird der Reload-Wert geladen und der Abtastzyklus angestoßen. Wurde z.B. bei dem beschriebenen zeitgleichen Abtastvorgang für Antrieb A1 (Referenzantrieb) der Timerstand TA1 = 500 und für Antrieb A2 ein Timerstand TA2 = 750 ausgelesen, so kann das Einlaufen in den Synchronbetrieb dadurch gewährleistet werden, daß zum Antrieb A2 ein neuer manipulierter Reload-Wert von TA2 = 999 übertragen wird. Dadurch wird der Abtastzyklus vom dezentralen Antrieb A2 beschleunigt und die Startzeitpunkte der Abtastzyklen der Timer T1 und T2 laufen aufeinander zu. Die aktuelle relative Lage der Abtastzyklen wird durch wiederholtes zeitgleiches Auslesen der aktuellen Timerstände bzw. Phasenwinkel ϕ1, ϕ2 überprüft. Erreichen die Abtastzyklen der Teilnehmer ein vordefiniertes Toleranzband, welches durch die Zykluszeiten der Busübertragung und der Abarbeitung der Synchronisationsregelung vorgegeben wird, wird zum Antrieb A2 wieder ein Reload-Wert TA2 = 1000 übertragen.

Dieser Mechanismus wird zyklisch abgearbeitet, da - wie eingangs bereits dargestellt - die Abtastzyklen der einzelnen dezentralen Baugruppen/Antriebe aufgrund der Toleranzen der Quarze oder anderer Einflüsse ständig gegeneinander driften. Damit die Dynamik der Regelkreise durch die Manipulation der Zykluszeit möglichst wenig beeinflußt wird, wird der Reload-Wert nur so geändert, daß die dadurch bedingte Abweichung klein gegenüber der Grundzykluszeit G ist. Im geschilderten Fall beträgt die Abweichung lediglich 1/1000 der Grundzykluszeit G.

Prinzipiell ist es möglich, die Auswahl, ob der Reload-Wert von Timer 1 oder 2 modifiziert wird, so vorzunehmen, daß ein möglichst schnelles Erreichen des Toleranzbandes ermöglicht wird und verhindert wird, daß die relative Lage der Abtastzyklen einen vollständigen Abtastzyklus durchläuft. Dies setzt selbstverständlich voraus, daß nicht ein fester Referenzabtastzyklus einer einzelnen dezentralen Antriebseinheit vorgesehen ist, sondern daß die Zuordnung als Referenzeinheit variabel ist. Dies hängt selbstverständlich ebenfalls vom jeweiligen Anwendungsfall ab.

Im konkreten Ausführungsbeispiel gemäß der Darstellung nach FIG 1 wird vom Regelglied R als Stellgröße RW somit die Sollfrequenz für Antrieb A2 bereitgestellt. Dieser Wert wird über das serielle Bussystem B zum dezentralen Antrieb A2 übertragen, dort wird der programmierbare Frequenzgenerator FG2 mit dieser modifizierten Sollfrequenz als Stellgröße RW beaufschlagt. Prinzipiell ist es möglich, das Regelglied R auch als adaptiven Regler auszugestalten, was zur Folge hat, daß eine quantitativ variierende Manipulation der Zykluszeit auf Seiten der aufzusynchronisierenden dezentralen Baugruppen möglich wird. Dies kann beispielsweise dadurch geschehen, daß in Abhängigkeit der Größe des Phasenfehlers Δϕ eine unterschiedlich große Veränderung der Sollfrequenz für den Antrieb A2 vorgenommen wird. Im Hinblick auf das im vorangehenden geschbilderte Beispiel mit Variation des Timer-Reload-Wertes bedeutet dies, daß der Reload-Wert nicht lediglich zwischen 999,1000 oder 1001 variiert wird, sondern beispielsweise auch in einem größeren um die Grundzykluszeit G von 1000 liegenden Wert.

Um die Auflösung, welche durch die Zeitbasis auf Seiten der dezentralen Baugruppen bedingt ist, zu erhöhen, ist es auch denkbar, den Mittelwert über mehrere veränderte Reload-Werte zugrundezulegen. Dies kann beispielsweise dadurch geschehen, daß als Stellgröße der Reload-Wert ständig zwischen 999 und 1000 gewechselt wird, was im Durchschnitt einer Veränderung der Grundzykluszeit G um ein zweitausendstel entspricht. Auf diese Art und Weise lassen sich über mehrere periodendauern der Abtastzyklen beliebig feine Manipulationen der Zykluszeit erreichen.

Die Tatsache, daß ein vorteilhaftes Ausführungsbeispiel anhand der Steuerung von dezentralen Antrieben beschrieben wurde, bedeutet nicht, daß die Erfindung auf diesen Anwendungsfall beschränkt ist. Vielmehr sind beliebige dezentrale Baugruppen, welche über ein serielles nicht deterministisches Bussystem synchronisiert werden müssen, anwendbar. Damit ist die technische Lehre gemäß der vorliegenden Erfindung für die Synchronisation der unterschiedlichsten dezentralen Baugruppen geeignet.

## Patentansprüche

1. Vorrichtung zum Synchronisieren dezentraler zyklisch getakteter Baugruppen (A1,A2) an seriellen, nicht deterministischen Bussystemen (B) mit einer Systemsteuerung (S) und jeweils jeder Baugruppe (A1,A2) zugeordneten Mitteln (T1,T2) zum Erzeugen von Abtastzyklen gleicher Grundzykluszeit (G), **dadurch gekennzeichnet,** daß ein Mechanismus vorgesehen ist, welcher eine zeitgleiche Abtastung der Lage der jeweiligen Abtastzyklen aller oder einer Anzahl von Baugruppen (A1,A2) ermöglicht, und ein Regelglied (R) vorgesehen ist, über welches in Abhängigkeit der relativen Lage der jeweiligen Abtastzyklen mindestens eine Stellgröße (RW) vorgebbar ist, mit der die Zykluszeit mindestens eines Mittels (T1,T2) zum Erzeugen von Abtastzyklen so manipulierbar ist, daß die dadurch bedingte Abweichung klein gegenüber der Grundzykluszeit (G) ist und jeder manipulierte Abtastzyklus in einen synchronen Bereich einläuft.

2. Vorrichtung nach Anspruch 1, **dadurch ge-kennzeichnet,** daß die abgetasteten Lagewerte der jeweiligen Abtastzyklen zeitlich versetzt über das serielle Bussystem (B) zum Regelglied (R) übertragbar sind.

3. Vorrichtung nach Anspruch 1 oder 2, **dadurch ge-kennzeichnet,** daß jedes Mittel (T1,T2) zum Erzeugen von Abtastzyklen als programmierbarer Timer ausgeprägt ist.

4. Vorrichtung nach Anspruch 1, 2 oder 3, **dadurch gekennzeichnet,** daß zur zeitgleichen Abtastung der Lage der jeweiligen Abtastzyklen von der Systemsteuerung (S) ein globales Signal (GC) zeitgleich über das Bussystem (B) an die dezentralen Baugruppen (A1,A2) absetzbar ist, auf das hin jede Baugruppe (A1,A2) den zugehörigen Lagewert zur Übertragung über das Bussystem (B) bereitstellt.

5. Vorrichtung nach einem der vorangehenden Ansprüche, **dadurch gekennzeichnet,** daß das Regelglied (R) als Zweipunktregler oder als Dreipunkt- oder Mehrpunktregler oder als Regler mit proportionalem und/oder integralem Verhalten ausgeprägt ist.

6. Vorrichtung nach einem der Ansprüche 1 bis 4, **dadurch gekennzeichnet,** daß das Regelglied (R) als adaptiver Regler ausgeprägt ist.

7. Vorrichtung nach einem der vorangehenden Ansprüche, **dadurch gekennzeichnet,** daß das Regelglied (R) auf Seiten der Systemsteuerung (S) angeordnet ist.

8. Vorrichtung nach einem der Ansprüche 1 bis 6, **dadurch gekennzeichnet,** daß mindestens ein Regelglied (R) auf Seiten einer dezentralen Baugruppe (A1,A2) angeordnet ist.

9. Vorrichtung nach einem der vorangehenden Ansprüche, **dadurch gekennzeichnet,** daß als dezentrale Baugruppen (A1,A2) dezentrale Antriebe eines Antriebssystemes vorgesehen sind und als jeweiliger Lagewert der zugehörigen Abtastzyklen jeweils ein dem zugeordneten Antrieb zugehöriger Phasenwinkel (W1,W2) vorgesehen ist.

10. Verfahren zum Synchronisieren dezentraler zyklisch getakteter Baugruppen (A1,A2) an seriellen, nicht deterministischen Bussystemen (B) mit einer Systemsteuerung (S) und jeweils jeder Baugruppe (A1,A2) zugeordneten Mitteln (T1,T2) zum Erzeugen von Abtastzyklen gleicher Grundzykluszeit (G), **dadurch gekennzeichnet,** daß eine zeitgleiche Abtastung der Lage der jeweiligen Abtastzyklen aller oder einer Anzahl von Baugruppen (A1,A2) vorgenommen wird, und über eine Regelung (R) in Abhängigkeit der relativen Lage der jeweiligen Abtastzyklen mindestens eine Stellgröße (RW) vorgegeben wird, mit der die Zykluszeit mindestens eines Mittels (T1,T2) zum Erzeugen von Abtastzyklen so manipuliert wird, daß die dadurch bedingte Abweichung klein gegenüber der Grundzykluszeit (G) ist und jeder manipulierte Abtastzyklus in einen synchronen Bereich einläuft.
